(19) Europäisches Patentamt
European Patent Office
Office européen des brevets

(11) **EP 3 312 736 A1**

(12) **EUROPEAN PATENT APPLICATION**

(43) Date of publication:
**25.04.2018 Bulletin 2018/17**

(51) Int Cl.:
*G06F 17/30* (2006.01)

(21) Application number: **16205543.8**

(22) Date of filing: **20.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.10.2016 DE 102016220781**

(71) Applicant: **FUJITSU LIMITED
Kawasaki-shi Kanagawa 211-8588 (JP)**

(72) Inventors:
• MUÑOZ, Manuel Peña
  41006 Sevilla (ES)
• LLAVES, Alejandro
  28011 Madrid (ES)
• DE LA TORRE, Victor
  28007 Madrid (ES)

(74) Representative: **Hutchison, James
Haseltine Lake LLP
300 High Holborn
London, Greater London WC1V 7JH (GB)**

(54) **APPARATUS PROGRAM & METHOD FOR DATA PROPERTY RECOGNITION**

(57)     Embodiments include a data property recognition apparatus, comprising: a reference data storage unit storing a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries; a query processor, configured to obtain, from a data source, a query set of data entries; a feature vector generation processor configured to obtain the query set of data entries from the query processor, to generate a value of each of the set of statistical characteristics for the query set of data entries, and to output a query feature vector composed of the generated values of statistical characteristics; a comparison processor, configured to obtain the query feature vector, to execute vector comparisons between the query feature vector and the plurality of stored reference feature vectors, and to rank the descriptors stored in association with the reference feature vectors based on the result of the vector comparison between the query feature vector and the respective associated reference feature vector; a property descriptor selection processor, configured to select a best match descriptor from among the descriptors stored in association with the reference feature vectors based on the ranking of the descriptors by the comparison processor; a reconciled data manager, configured to add the query set of data entries to a reconciled data storage unit in association with the best match descriptor.

FIG. 1

## Description

This invention lies in the field of data science, and in particular relates to the automation of reconciliation of data entries from multiple data sources.

REFERENCE TO RELATED APPLICATION

The present specification relates to co-pending German patent application no. 102016220771.7, the entirety of which is herein incorporated by reference.

INTRODUCTION

Nowadays, in the data science domain, the most time consuming tasks are: extract - transform - load (ETL) tasks which consume around the 60 - 70% of the time of data scientists, and are low value-tasks. How to ingest and interpret automatically the data for saving time and resources is a technical challenge bearing parallels to disciplines such as automatic speech recognition. Full or partial automation of data ingestion tasks would enable data scientists to spend more time executing added-value tasks.

Data scientists spend time organizing and cleaning data, which time could be better-spent on procedures such as modelling or data mining. Standardization bodies, such as the World Wide Web Consortium (W3C), have worked for many years on proposing formats and best practices to facilitate data publication and sharing. However, not all data providers publish their data according to standards. Moreover, most standards focus on the syntax of the data model and forget about the data semantics. This often results in semantic interoperability problems when data from different sources are exchanged and merged, e.g. when two datasets refer to the same data property using different names.

In the data science domain some efforts to recognise and recommend data properties in an autonomous manner have so far been quite limited. Traditionally, most of the efforts to identify and recognise data in general terms are focussed on semantic and syntactic techniques.

The identification of data properties in a dataset it is complex and time-consuming when proper metadata is not available.

Embodiments of the present invention include: a data property recognition apparatus, comprising: a reference data storage unit storing a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries; a query processor, configured to obtain, from a data source, a query set of data entries; a feature vector generation processor configured to obtain the query set of data entries from the query processor, to generate a value of each of the set of statistical characteristics for the query set of data entries, and to output a query feature vector composed of the generated values of statistical characteristics; a comparison processor, configured to obtain the query feature vector, to execute vector comparisons between the query feature vector and the plurality of stored reference feature vectors, and to rank the descriptors stored in association with the reference feature vectors based on the result of the vector comparison between the query feature vector and the respective associated reference feature vector; a property descriptor selection processor, configured to select a best match descriptor from among the descriptors stored in association with the reference feature vectors based on the ranking of the descriptors by the comparison processor; a reconciled data manager, configured to add the query set of data entries to a reconciled data storage unit in association with the best match descriptor.

Advantageously, embodiments provide a mechanism for a machine to recognise a descriptor, which is a semantic representation of a property represented by individual data entries in a set of data entries, for a query set of data entries from a data source. The query set of data entries from the data source are ingested into the reconciled data storage in an intelligent manner by virtue of the data property recognition apparatus which serves to interpret the data entries being ingested (the query set of data entries) by comparing a vector (the query feature vector) of statistical characteristics with a stored set of reference vectors of statistical characteristics (the reference feature vectors), and thus to attribute a descriptor associated with a best match among the stored set of reference vectors to the data entries being interpreted.

A feature vector is a unique representation of a data property, similar to a fingerprint for a human. The feature vector may be referred to as a data property fingerprint, because it provides a unique identifier for a set of data entries. A property of a set of data entries is an attribute of a dataset, database, or data source. The data property recognition apparatus recognises a property descriptor from among property descriptors stored in association with model sets of data entries to associate with a query set of data entries being added to a reconciled data storage unit.

The query set of data entries may be entries from a relational database, the query set of data entries being a column of data entries. Alternatively or additionally, the query set of data entries may be elements stored as objects in a graph database, with the objects being linked in the graph to subject entities by arcs sharing a common label.

The model sets of data entries may be entries from labelled columns in a relational database, so that each column's data entries are acquired as a model set of data entries, and the label of the column is stored as the descriptor of the property commonly represented by the individual data entries in the model set. Alternatively or additionally, the model sets of data entries may be elements stored as objects in a graph database, with the objects being linked in the graph to subject entities by arcs sharing a common label, the common label being the descriptor of the property which the data entries commonly represent.

Rather than relying on semantic analysis of labels for properties in heterogeneous data sources, the set of reference feature vectors stored by the storage unit provides a means for statistical comparison of data behaviour in order to compare sets of data entries, and to determine whether or not they are data entries representing the same property (or should be attributed the same property descriptor). It is not necessary that the entities are the same - the data property recognition apparatus leverages the assumption that sets of data entries representing the same property, whether for the same, overlapping, or non-overlapping entities, will be better-matched in terms of statistical characteristics, than one of those sets of data entries will be matched with sets of data entries representing different properties.

The model sets of data entries are referred to as model to indicate that the relation between data entries and the descriptor of the property represented by the entries is to be replicated in data being added to the reconciled data storage unit. That is to say, the relation between the semantic representation (descriptor) of the property represented by the set of data entries, and the data entries, is a model to which data sets from other sources can be compared and/or conformed.

The vector comparisons provide a basis upon which to rank the descriptors of the model sets of data entries and select a best match descriptor. Embodiments may also leverage semantic comparisons as a basis upon which to perform said ranking and selecting:

The vector comparison may be a cosine distance comparison. The vector comparison may be a comparison of each component (wherein compared components represent values of the same statistical characteristic), wherein the component comparisons are attributed weightings in the calculation of the vector comparison.

Storing data from multiple sources according to a reconciled schema has implementations in technological domains including healthcare, energy, transport, and others. The common feature is data property recognition and use of reference data to provide a model schema.

Optionally, the query processor is configured to obtain, from the data source, a descriptor identifying a property represented by the query set of data entries; and the comparison processor is configured to obtain, as a query set descriptor, the descriptor identifying a property represented by the query set of data entries, to execute semantic comparisons between the query set descriptor and the descriptors stored in association with the reference feature vectors, respectively, wherein the ranking of the descriptors stored in association with the reference feature vectors is based both on the result of the executed semantic comparison between the descriptor and the query set descriptor, and on the result of the vector comparison between the query feature vector and the respective associated reference feature vector.

For example, it may be that both the vector comparison and the semantic comparison generate similarity scores, which can be normalised and combined (for example, by multiplication or weighted multiplication) to generate an aggregate similarity score defining position within the ranking. The semantic comparison may be, for example, a string distance comparison, or finding a shortest path between the respective descriptors in a graph-based ontological model.

Advantageously, the semantic comparison provides more information on the similarity of two descriptors being compared, and therefore the ranking encompasses more information, and the selection of the best-match descriptor is based on more information and hence improves in accuracy.

Embodiments may be configured such that the reconciled data manager is configured to add the query set of data entries to the reconciled data storage with the best match descriptor on condition of approval of a user of the data property recognition apparatus. In particular:

Optionally, the property descriptor selection processor is configured to output a user interface comprising the highest-ranked descriptor according to the ranking by the comparison processor as a selectable descriptor, and to receive via the user interface an input selection of the selectable descriptor as the best match descriptor; and the reconciled data manager may be configured, in response to the input selection of the selectable descriptor at the user interface, to add the query set of data entries to the reconciled data storage unit in association with the selected best match descriptor.

The interface may also comprise a representation of the query data entries and a descriptor in association with which they are stored in the native data source from which they are obtained by the query processor, to inform the selection of the user. The interface may be, for example, a graphical user interface. The interface may be output to a user-controlled client device over a network connection between the user-controlled client device and the data property recognition apparatus.

Advantageously, the user retains some control over the ingestion of the query set of data entries into the reconciled data storage unit, but the amount of manual intervention required compared with existing ETL techniques is minimal.

Furthermore, the user interface may comprise the top n descriptors according to the ranking by the comparison processor as selectable descriptors, the property descriptor selection processor being configured to receive an input selection of one of the selectable descriptors as the selected best match descriptor.

Embodiments in which the top n (wherein n is a positive integer, for example, 2 or 3) descriptors are output have the advantage of hard-wiring the choice of descriptors to comply with the schema of the model sets of data entries, but still presents the user some ability to control which descriptor is attributed to the query set of data entries upon ingestion to the reconciled data storage unit.

Optionally, the result of each executed vector comparison is a number and the result of each executed semantic comparison is a number, and the comparison processor comprises a model which converts the vector comparison result number and the semantic comparison result number into an aggregate result value representing a degree of relevance of the respective descriptor to the query set of data entries, the ranking being in order of aggregate result value.

Optionally, the user interface comprising the top n descriptors also indicates the aggregate result value of each of the top n descriptors included in the user interface.

The model may be, for example, a formula such as a weighted multiplication or weighted average.

The data property recognition apparatus of embodiments may further comprise: a model training processor configured to train the model by at least: monitoring, for each of a plurality of instances of query sets of data entries obtained by the query processor, the top n descriptors included as selectable descriptors in the user interface, and the input selection from among the selectable descriptors, and, reconfiguring the model to maximise, for the monitored instances, a number of instances for which the descriptor ranked first in order of aggregate result value matches the input selection.

The model training processor is an artificial intelligence program or algorithm running on a processor.

The plurality of instances of query sets of data entries obtained by the query processor are the training samples, and may be designed specifically for that purpose. Alternatively, it may be that the plurality of instances of query sets of data entries are simply sets of data entries from a data source that is to be reconciled with the model sets of data entries, and the model training processor monitors the top n descriptors and the input selections in order to learn how the model could be adapted to better match the top descriptor with the user selection. The model may be initiated with default parameters and then updated by the model training processor after a training phase of monitoring and reconfiguring.

Embodiments may be restricted to a plurality of supported data types. For example: each individual model set of data entries among the model sets of data entries is constrained to comprise data entries of a common data type, the common data type being one of plural supported data types; the query set of data entries is constrained to comprise data entries of a common data type, the common data type being one of the plural supported data types; the set of statistical characteristics for which values are included in each of the reference feature vectors is dependent upon the data type from the plural supported data types of the data entries comprising the respective model set of data entries; and the set of statistical characteristics for which values are included in the query feature vector is dependent upon the data type from the plural supported data types of the data entries comprising the query set of data entries; the plural supported data types being string, numeric, and numerical time-series.

The executed vector comparisons may comprise a preprocessing step using data types as a discriminator. In particular, the executed vector comparisons may be between the query feature vector and each of the stored reference set of feature vectors, and the comparison may comprise: a preprocessing step of comparing a data type of the set of data entries represented by the reference feature vector with a data type of the query set of data entries represented by the query feature vector, and when the data types are different based on the comparison of the preprocessing step, excluding the reference feature vector from vector comparison; and when the data types are the same, performing a vector comparison between the query feature vector and the reference feature vector to obtain a number representing the similarity between the compared feature vectors.

The query feature vector is the feature vector generated for the query set of data entries. The composition of the feature vectors, that is, the statistical characteristics that they contain, may be peculiar to the data type, so that the feature vector may not explicitly specify a data type in order for the data type to be identifiable from the feature vector. Alternatively, it may be that the feature vector for a set of data entries does include an entry explicitly identifying the data type of the set of data entries.

Comparison of statistical characteristics within a feature vector is only executed between feature vectors representing sets of data entries of the same data type. Therefore, the comparison of data types can be considered to be a pre-processing step for the vector comparison.

The similarity value is the result of the vector comparison. The vector comparison may be, for example, a cosine distance comparison of the two feature vectors, generating a similarity value between 0 (minimum) and 1 (maximum).

Advantageously, the vector comparison of two feature vectors is a computationally efficient manner in which to compare two sets of data entries. The processing overhead of generating the feature vectors is repaid in the ease of comparison between the feature vector for the query set of data entries and the reference set of feature vectors. Therefore, embodiments are scalable over very large sets of reference vectors.

Composition of feature vectors in terms of statistical characteristics is dependent on implementation, and may be selected at design time, or by a user at run time via a user interface. Feature vectors may include data identifying which of the supported data types is the set of data entries for which the feature vector was generated. Embodiments may also store a record of, for each data type, which statistical characteristics are recorded in the feature vector and in which order. Such a record forms a feature vector schema.

Embodiments of another aspect include: a data property recognition method, comprising: storing a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries; obtaining, from a data source, a query set of data entries; generating a value of each of the set of statistical characteristics for the query set of data entries, and compiling a query feature vector composed of the generated values of statistical characteristics; executing vector comparisons between the query feature vector and the plurality of stored reference feature vectors, and ranking the descriptors stored in association with the reference feature vectors based on the result of the vector comparison between the query feature vector and the respective associated reference feature vector; selecting a best match descriptor from among the descriptors stored in association with the reference feature vectors based on the ranking of the descriptors by the comparison processor; and adding the query set of data entries to a reconciled data storage unit for storage in association with the best match descriptor.

Embodiments of another aspect include a computer program which, when executed by a computing apparatus, causes the computing apparatus to function as a computing apparatus defined above as an invention embodiment.

Embodiments of another aspect include a computer program which, when executed by a computing apparatus, causes the computing apparatus to perform a method defined above or elsewhere in this document as an invention embodiment.

Furthermore, embodiments of the present invention include a computer program or suite of computer programs, which, when executed by a plurality of interconnected computing devices, cause the plurality of interconnected computing devices to perform a method embodying the present invention.

Embodiments of the present invention also include a computer program or suite of computer programs, which, when executed by a plurality of interconnected computing devices, cause the plurality of interconnected computing devices to function as a computing apparatus defined above or elsewhere in this document as an invention embodiment.

A detailed description of embodiments will be set out below, with reference to the accompanying drawings, in which:

Figure 1 is a schematic illustration of an apparatus embodiment;
Figure 2 illustrates a method of an embodiment;
Figure 3 is a schematic illustration of another apparatus embodiment;
Figure 4 illustrates a feature vector generation processor;
Figure 5 illustrates the functionality of the field normalisation module;
Figure 6 illustrates the functionality of the feature vector generation module;
Figure 7 illustrates the functionality of the comparison processor;
Figure 8 illustrates the functionality of the semantic comparison processor;
Figure 9 is a flowchart of the processing performed by the semantic comparison processor; and
Figure 10 illustrates an exemplary hardware configuration of an apparatus embodiment.

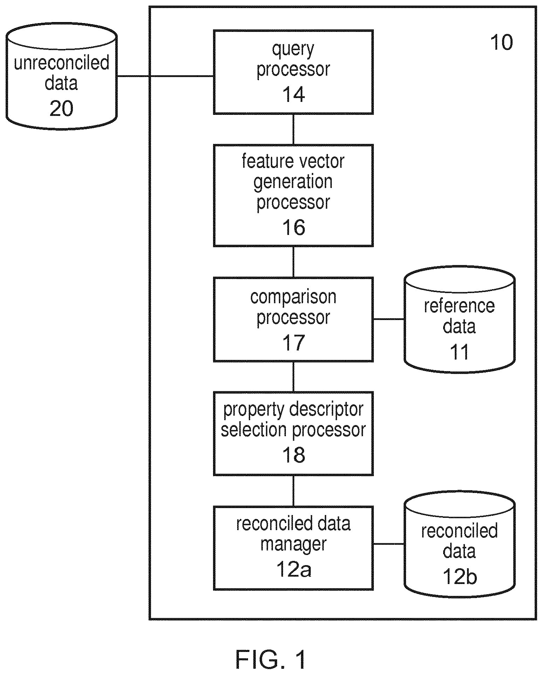

Figure 1 illustrates a data property recognition apparatus 10 of an embodiment. The data property recognition apparatus 10 comprises the following components: a reference data storage unit 11, a reconciled data storage manager 12a; a reconciled data storage unit 12b; a query processor 14; a feature vector generation processor 16; a comparison processor 17; and a property descriptor selection processor 18. The processor components are programmed processors executing stored processing instructions to perform their assigned functions, and utilising other hardware including memory for storing data during processing, and I/O hardware for exchanging data with entities outside of the data property recognition apparatus 10.

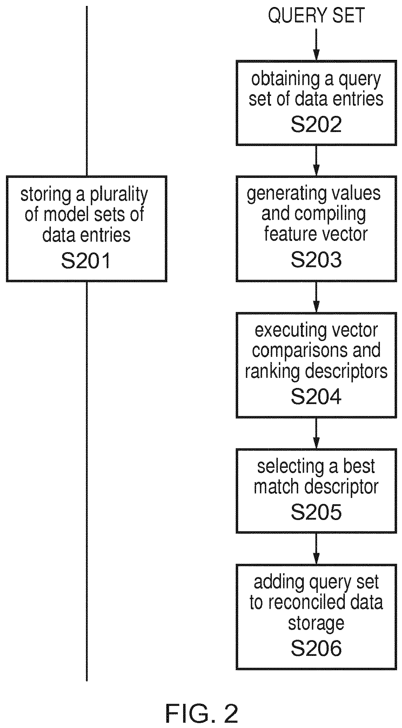

Figure 2 illustrates a data property recognition method of an embodiment.

A step of storing a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries; is represented by step S201 of Figure 2. The line intersecting step S201 indicates that the storage persists during performance of steps S202 to S206. The storage of the plurality of model sets of data entries in step S201 may be performed by the reference data storage unit 11 of Figure 1.

The reference data storage unit 11 stores a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries.

A set of data entries (i.e. a model set of data entries or a query set of data entries) is a plurality of data entries that form a set by virtue of representing (i.e. storing) a value of the same property. In relational database terms, a set of data entries is a column of data entries. In graph database terms, a set of data entries is object values linked to their respective subject entities by labelled edges having the same label. A data entry may be a single data value or may comprise two data values (a tuple), or, in some cases, three or more data values.

The property common to the model set of data entries is the property of which a value is provided by each data entry in the model set of data entries. The descriptor of the property (property descriptor) is a semantic representation, or semantic description of, the property. Descriptors are important pieces of technical data because they provide a means for the property represented by the entries in a set of data entries to be identified not only by a human analysing the data, but by other machines accessing the data. In other words, by properly labelling data entries with appropriate descriptors, the data entries and their significance can be interpreted by a machine.

The descriptor stored in association with the reference feature vector may be user-assigned (wherein user refers to a user of the data property recognition apparatus). For example, the user may assign (via an interface) a reference data source having a schema to which other data sources are to be reconciled. The sets of data entries in the reference data source are acquired and stored as model sets of data entries, along with user-assigned property descriptors and reference feature vectors. The reference feature vectors may, for example, be generated by the feature vector generation processor 16. The user-assigned property descriptors may be a column label from a relational database or a predicate (edge label) from a graph database, in either case, the descriptor is considered to be user-assigned by virtue of user selection of the reference data source. Otherwise, the user may be specifically prompted via a user interface for a property descriptor for each model set of data entries.

The reference data storage unit 11 may include a management unit, that is, software controlling read and write accesses to the data stored by the reference data storage unit.

A step of obtaining, from a data source, a query set of data entries, is represented by step S202 in Figure 2. The obtaining step S202 of Figure 2 may be performed by the query processor 14 of Figure 1.

The query processor 14 is configured to obtain, from a data source 20 external to the data property recognition apparatus 10, a query set of data entries. The data source 20 may be the or each of one or more data sources containing data entries to be reconciled with the model sets of data entries. That is to say, the data source (or sets of data entries therefrom) is to be stored in the reconciled data storage unit 12b in accordance with the schema of the reference set of data entries. The data source 20 may be assigned by a user of the data property recognition apparatus 10 as a data source 20 from which the query processor 14 is to obtain sets of data entries for processing and storage in the reconciled data storage unit 12b. In addition, particular sets of data entries from the data source 20 may be identified by the user as query sets of data entries to be obtained by the query processor 14.

A step of generating a value of each of the set of statistical characteristics for the query set of data entries, and compiling a query feature vector composed of the generated values of statistical characteristics is represented by step S203 in Figure 2. The generating values and compiling feature vector step S203 may be performed by the feature vector generation processor 16 of Figure 1.

The feature vector generation processor 16 is configured to obtain the query set of data entries from the query processor, to generate a value of each of the set of statistical characteristics for the query set of data entries, and to output a query feature vector composed of the generated values of statistical characteristics.

Reference is hereby made to related German patent application no. 102016220771.7, incorporated herein by reference, which discloses an example of a feature vector generation processor.

The feature vector generation processor 16 stores processing logic for generating values for statistical characteristics from input sets of data entries. The statistical characteristics of which values are to be included in a feature vector for a set of data entries is dependent upon the data type of the data entries. Hence, the selection of which processing logic is to be executed by the feature vector generation processor in transforming the input set of data entries into a feature vector composed of values of a selected set of statistical characteristics, is dependent upon the data type of the set of data entries.

The feature vector generation processor 16 takes a set of data entries (which may also be referred to as data values or data entry values) belonging to any of supported types (numbers, strings, numerical time-series) and creates a feature vector. A feature vector contains a value for each one of a set of statistical characteristics of the data entries representing an identified data property. The membership of the individual sets of statistical characteristics is detailed below.

The set of statistical characteristics for an input set of data entries recognised as being of the number type, comprises two or more from among the following:

  number of data entries;
  minimum value;

maximum value;
first quartile value;
third quartile value;
median value;
mean;
standard deviation;
variance;
most repeated data entry.

The set of statistical characteristics for an input set of data entries recognised as being of the string type, comprises two or more from among the following:

number of data entries;
alphabet of data entries;
average number of characters per data entry;
average number of white spaces per data entry;
average number of full stops per data entry;
average number of commas per data entry;
average number of semicolons per data entry;
most repeated data entry;
longest common substring;
percentage of unique entries.

The set of statistical characteristics for an input set of data values recognised as being of the string type, comprises two or more from among the following:

number of data values;
number of entries;
minimum numerical value;
maximum numerical value;
first quartile numerical value;
third quartile numerical value;
median numerical value;
mean of numerical values;
standard deviation;
variance;
covariance;
skewness;
kurtosis;
start date;
end date.

The membership of the set of statistical characteristics for a data type is respectively fixed per-implementation, so that in a particular data property recognition apparatus operating on a particular task, project, or group of data sources, the feature vector generation processor 16 is configured to generate values of the same statistical characteristics for input data sets of a given data type. In this manner, the feature vectors for the data type are comparable in the implementation.

Membership of the set of statistical characteristics in the query feature vector generated by the feature vector generation processor 16 for the query set of data entries of a particular data type is the same as the membership of the set of statistical characteristics for which values are stored in the reference set of feature vectors for model sets of data entries of the same particular data type. In this way, the query feature vector is comparable to the reference feature vectors.

A step of executing vector comparisons between the query feature vector and the plurality of stored reference feature vectors, and ranking the descriptors stored in association with the reference feature vectors based on the result of the vector comparison between the query feature vector and the respective associated reference feature vector; is represented by step S204 of Figure 2. The executing vector comparisons and ranking descriptors S204 may be performed by the comparison processor 17 of Figure 1.

The comparison processor 17 is configured to obtain the query feature vector generated by the feature vector generation processor 16, to execute vector comparisons between the query feature vector and the plurality of stored reference feature vectors, and to rank the descriptors stored in association with the reference feature vectors based on the result of the vector comparison between the query feature vector and the respective associated reference feature vector. Ranking in this context means assigning a position in an order, so that the descriptors stored in association with the best match (i.e. closest) reference feature vectors based on the vector comparison can be identified from their ranking. The ranking does not necessarily place all feature vectors in order of distance, for example, it may be that the ranking divides the compared reference feature vectors into two positions (closest and not closest) or n+1 positions (top n, ranked in order of closeness, and the remainder). The comparison processor may generate a numerical representation of each vector comparison, which numerical representation forms the basis of the ranking, and may be recorded.

The vector comparisons may be, for example, cosine distance comparisons. The vector comparisons may be restricted on the basis of data type, so that the data type of the query set of data entries is identified, and vector comparisons are only carried out for reference feature vectors stored in association with model sets of data entries of the identified data type.

A step of selecting a best match descriptor from among the descriptors stored in association with the reference feature vectors based on the ranking of the descriptors by the comparison processor is represented by step S205 in Figure 2. The selecting a best match descriptor S205 may be performed by the property descriptor selection processor 18 of Figure 1.

Once the descriptors have been ranked on the basis of the vector comparisons performed by the comparison processor 17, the property descriptor selection processor 18 is configured to select a best match descriptor from among the descriptors stored in association with the reference feature vectors based on the ranking of the descriptors by the comparison processor 17. For example, the property descriptor selection processor 18 may be configured to select the highest-ranked (i.e. the descriptor stored in association with the reference set of data entries for which the reference feature vector was closest to the query feature vector based on the vector comparisons) descriptor for the query set of data entries.

Alternatively or additionally, the selection may be conditional on user approval, so that a user is provided with said highest-ranked descriptor and given the opportunity to approve the selection or otherwise. An approved selection confirms storage of the query set of data entries with the highest-ranked descriptor in the reconciled data storage unit 12b.

Once a selection of best match descriptor has been made by the property descriptor selection processor 18 (with or without manual intervention) the reconciled data manager 12a is configured to add the query set of data entries to a reconciled data storage unit 12b for storage in association with the best match descriptor. The query set of data entries are thereby accessible via the best match descriptor, and the query set of data entries will be interpreted by other machines accessing the reconciled data as data entries individually representing values of the property semantically represented by the descriptor. The manual intervention required in operating the data property recognition apparatus 10 is greatly reduced in comparison with known ETL processes.

A step of adding the query set of data entries to a reconciled data storage unit for storage in association with the best match descriptor is represented by step S206 of Figure 2. The adding the query set to the reconciled data storage S206 may be performed by the reconciled data manager 12a of Figure 1 writing to the reconciled data storage unit 12b of Figure 1.

The reconciled data storage unit 12b is accessible to other machines via the reconciled data manager 12a. The storage of the ingested query data entry sets in association with appropriate property descriptors means that the query data entry sets are stored in a manner in which they can be interpreted by other machines.

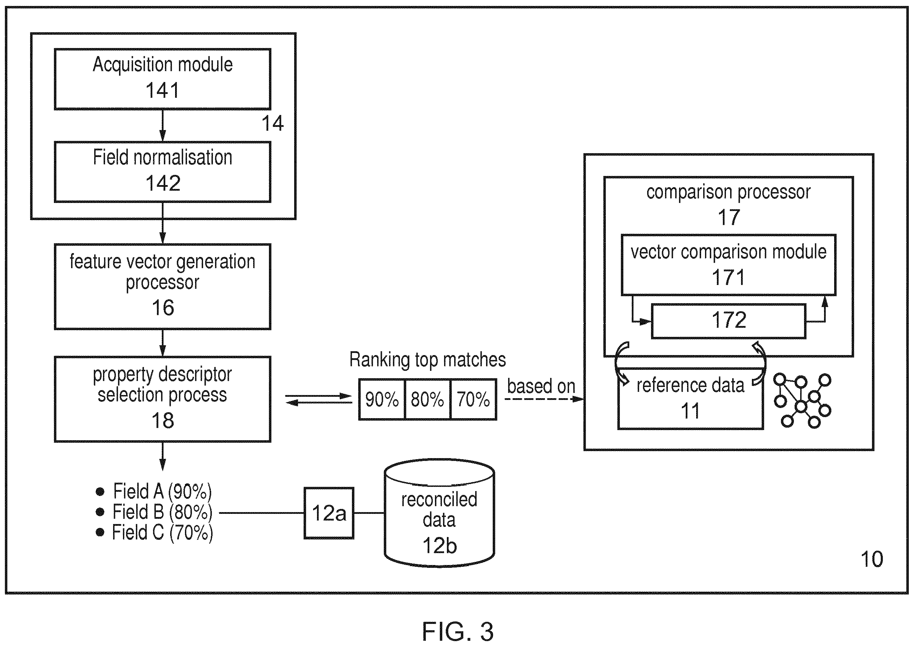

Figure 3 illustrates an example of the apparatus illustrated in Figure 1. In the particular example of Figure 3, the query processor 14 is divided into an acquisition module 141 and a field normalisation module 142. The comparison processor 17 is divided in a vector comparison module 171 and a semantic comparison module 172.

The acquisition module 141 is configured to extract the information from distributed heterogeneous data sources as query sets of data entries for storage in the reconciled data storage unit 12b. The acquisition module is configured to extract sets of data entries and, if stored with a property descriptor, the property descriptor of the set. The data sources could be in different formats and have different complexity grades of information. The data sources are identified, for example by a user of the apparatus 10, as being targets for storage in the reconciled data storage unit 12b in accordance with a schema (i.e. ontology of data property descriptors) used for model sets of data entries.

The acquisition module 141 provides the data in a standard format understandable by the other processors and modules of the apparatus 10. The optional normalisation module 142 is configured to transform and convert the data to predefined data format and units of expression, in preparation for processing by the feature vector generation processor 16. The normalisation module 142 standardises the format and units of sets of data entries obtained by the acquisition module 141. The normalisation module 142 may also be responsible for the cleansing of the obtained sets of data entries, for example, by the removal (or setting to nought) of null values and the removal (or moderation) of outliers.

The acquisition module 141 or the normalisation module 142 may also be responsible for filtering obtained data according to data type, wherein sets of data entries that are not of a common data type, and for which the common data type is not one of a plurality of data types supported by the apparatus 10, are excluded from further processing by the apparatus 10 (and, for example, discarded).

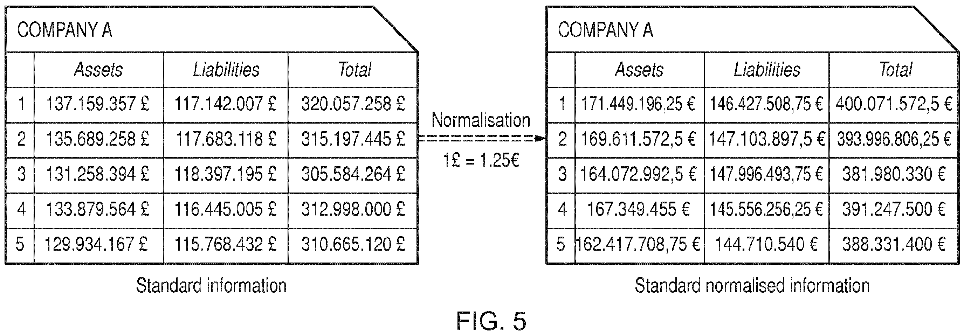

Figure 5 illustrates exemplary processing carried out by the normalisation module 142, in which the units in which three obtained sets of data entries are set to a unit predefined for the apparatus 10.

The feature vector generation processor 16 of Figure 3 is an example of the feature vector generation processor 16 of Figure 1. The feature vector generation processor 16 generates the query feature vector and may also have been responsible for generating the reference feature vectors for the model sets of data entries. A feature vector is a composition of values of statistical characteristics that describe the characteristic statistical pattern of the set of data entries. The feature vector components are values of statistical characteristics generated from the set of data entries.

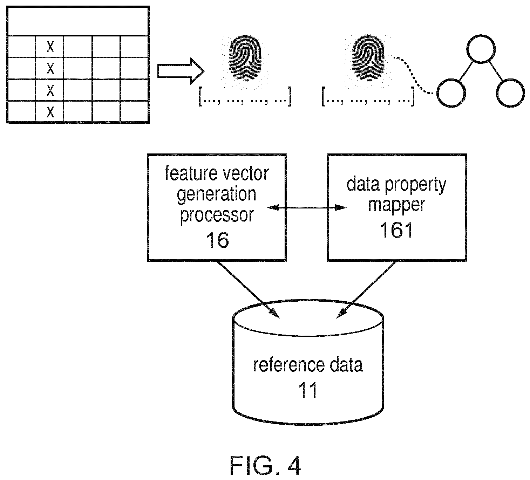

Figure 4 illustrates an exemplary feature vector generation processor. The reference data storage unit 11 stores a plurality of model sets of data entries. Figure 4 illustrates that the reference feature vectors for the respective model sets of data entries, may, for example, be generated by the feature vector generation processor 16. Each model set of data entries is mapped to a descriptor by the data property mapper 161. The reference feature vectors generated for the respective model sets of data entries and the feature vector to descriptor mappings are stored by the reference data storage unit 11.

A user may specify a data source or subset of data within a data source to acquire as the plurality of model sets of data entries, for processing by the feature vector generation processor 16. A prerequisite is that there are sufficient data entries in each set for statistical characteristics to be calculated by the feature vector generator processor 16. For example, a minimum number of data entries may be imposed, wherein if a set of data entries to be acquired has below the minimum number, a warning is issued to the user and/or the set of data entries is not acquired. The minimum number may be, for example, 2, 5, 10, 50, 100 or 200.

A further prerequisite is that the data entries in each model set of data entries are of a common data type, and that the data type is one of defined list. Depending on the implementation, the feature vector generation processor 16 may be responsible for rejecting any sets of data entries that are not of a common data type and of a data type other than from the defined list of supported data types. The defined list of supported data types may be: numeric, string, and numerical time-series. The specific format can vary within the specified type, so that, for example, numerical may be single-precision floating point format, double-precision floating point format, integers, decimals, etc. Numerical time-series data entries are tuples comprising a numeric value and a time/date value. String data entries are a single value, as are numeric data entries.

The feature vector generation processor 16 may only proceed to generate a feature vector for storage as a reference feature vector for model sets of data entries that are of a common data type and specifically are of a common data type from the defined list of supported data types.

The feature vector generation processor 16 is configured to acquire a model set of data entries from a data source (which may be identified by a user and the feature vector generation processor 16 configured accordingly) a model set of data entries, to recognise the data type common to the model set of data entries from among plural supported data types, to select a set of statistical characteristics representing the model set of data entries in dependence upon the recognised data type, to generate a value of each of the selected set of statistical characteristics from the plurality of data entries, and to output a reference feature vector to the storage unit 11 composed of the generated values of statistical characteristics, the plural supported data types comprising numbers, strings, and numerical time-series.

The feature vector output by the feature vector generation processor 16 for storage on the reference data storage unit 11 is mapped to a descriptor acquired with the respective model set of data entries by the data property mapper 161.

The feature vector generation processor 16 includes processing logic for generating values for statistical characteristics from model sets of data entries. The statistical characteristics of which values are to be included in a feature vector for a set of data entries is dependent upon the data type of the data entries. Hence, the selection of which processing logic, that is to be executed by the feature vector generation processor in transforming the input set of data entries into a feature vector composed of values of a selected set of statistical characteristics, is dependent upon the data type of the data entries.

The feature vector generation processor 16 takes a list of data entries (which may also be referred to as data values or data entry values) belonging to any of supported types (numbers, strings, numerical time-series) and creates a reference feature vector. A reference feature vector contains a value for each one of a set of statistical characteristics of the data entries representing an identified data property. The membership of the individual sets of statistical characteristics is detailed with reference to Figures 1 & 2.

Once the reference set of feature vectors are generated and stored in the storage unit 11, they are utilised to automate the recognition of a data property descriptor represented by data entries in a query set of data entries (steps S202 to S205 of Figure 2). Upon recognition, the query set is submitted to the reconciled data storage for storage in association with the recognised data property descriptor.

The feature vector generation processor 16 may further comprise a reference feature vector update processor, configured, upon submission of the recognised set of data entries stored to the reconciled data storage unit, to compile a composite set of data entries comprising each of the reference set of data entries and each of the other recognised sets of data entries stored in association with the same descriptor as the submitted recognised set of data entries, submitting the composite set of data entries to the feature vector generation processor 16, obtaining the feature vector output by the feature vector generation processor as an updated reference feature vector, and replacing the existing feature vector in the reference set of feature vectors stored in association with the identified property with the updated reference feature vector

The feature vectors generated by the feature vector generation processor 16 for the plurality of model sets of data entries serve as a basis for comparison with data sets for which an identity of a data property descriptor represented by the component data entries is sought. Therefore, it may be that the plurality of model sets of data entries are selected by a user, for example, wishing to replicate the schema of the plurality of model sets of data entries in other data sources of unknown or unidentifiable schema.

The storage unit 11 is configured to store the submitted feature vectors in association with the respective identified property. In addition, and in association with the feature vector and the respective identified property (identified explicitly or via a link to a knowledge base element), the storage unit 11 may store the model set of data entries for which the feature vector was generated, for example, in the form they appear in the data source from which they are acquired. The model set of data entries and the respective data property descriptor may be submitted to the storage 11, so that when the reference feature vector has been generated and output by the feature vector generation processor 16, it can be associated with the set of data entries and the respective identified property in the storage unit 11.

Thus, the storage unit 11 is functional as a repository for storing reference feature vectors that store a statistical representation or fingerprint of a set of data entries, in association with a data property descriptor that is represented by the data entries. The feature vectors are functional as a reference set of feature vectors for comparison with a feature vector output by the feature vector generation processor for a query set of data entries for which an identity of a data property descriptor commonly represented by the individual data entries is sought. A data property descriptor of a data property commonly represented by the individual data entries in such a query set of data entries may be sought because it is unknown, or because the schema of the data source from which the query set of data entries is acquired is undesirable to an apparatus user, for example, because it is heterogeneous with a required or model data schema. Inconsistencies in semantic expression between sets of data entries from disparate data sources is overcome, by comparing sets of data based on statistical features rather than semantic expression of a property represented by the data entries.

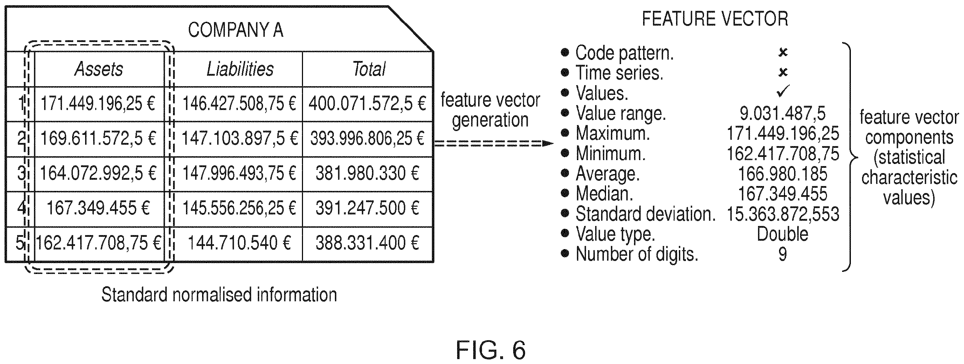

Figure 6 illustrates the generation of a feature vector from an input set of data entries by the feature vector generation processor 16.

In the example of Figure 3, the feature vector generation processor 16 analyses a data type common to the data entries in an input query set of data entries, and depending on the data type, a particular set of processing instructions for generating the query feature vector is executed. The processing is dependent on the data type of the date entries.

For example, the feature vector generation processor 16 is configured to detect whether the data type common to the query set of data entries is numeric, string, or numerical time-series. The feature vector generation processor 16 executes processing to generate a set of statistical characteristic values which define the set of data entries, the set of statistical characteristics for which values are calculated being dependent upon the data type of the query set of data entries.

The comparison processor 17 of Figure 3 is exemplary of the comparison processor of Figure 1. The comparison processor 17 of Figure 3 accepts as an input a query feature vector generated by the feature vector generation processor 16, and outputs a set of ranked property descriptors, which are ranked based on the similarity of a reference feature vector defining statistical characteristics of a model set of data entries which individually represent a value of the property described by the property descriptor. This similarity is focused mainly in comparison of stored reference feature vectors with the query feature vector, and optionally incorporates a semantic component. The comparison processor 17 utilises a model to combine: a vector comparison between the query feature vector and each reference feature vector stored in the reference data storage unit 11 in association with a model set of data entries of the same data type as the query set of data entries; and a semantic comparison between a property descriptor assigned to the query set of data entries in the data source from which they are obtained, and a property descriptor stored in association with the reference feature vector in the reference data storage unit 11. Based on said combination, the comparison processor 17 is able to supply a set of ranked property descriptors to the property descriptor selection processor 18.

The model generates an aggregate result value representing the similarity of the query set of data values to each model set of data values of the same data type, based on a comparison of statistical characteristics via the respective feature vectors, and comparison of semantic similarity of property descriptors associated with each. The model may be a weighted aggregation as described by the formula below:

$$W_R = W_S P_S + W_F \left( \sum_{i=1}^{n} W_{FF} P_{FF} \right)$$

$W_R$ -     aggregate result value;
$W_S$ -     weight applied to semantic comparison result;
$P_S$ -     semantic comparison result;
$W_F$ -     weight applied to vector comparison result;
$W_{FF}$ -  weight applied to individual feature vector component comparison;
$P_{FF}$ -  result of comparison of individual feature vector component.

The weights of all the elements are continuously fitted based on component relevance. For this purpose, an AI algorithm initialises the model and continuously modifies the weights based on results relevance after a training and test phase to evaluate the accuracy of the formula.

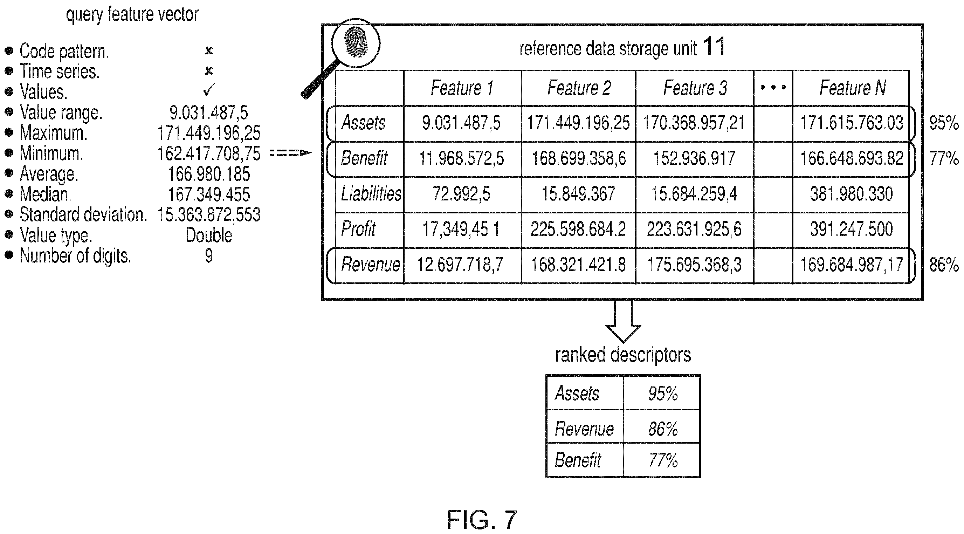

The vector comparison module 171 is configured to compute the similarity between the query feature vector and the stored reference feature vectors. The stored reference feature vectors are stored in association with a set of data entries and a property descriptor, the property descriptor being a semantic representation of the property described/defined/represented by the data entries. The vector comparison module 171 has as input the query feature vector and it provides a value representing the similarity of the query feature vector to each of the reference feature vectors, of the same data type as the query set of data entries. Figure 7 illustrates the functionality of the vector comparison module 171.

The reference data storage unit 11 contains the model sets of data entries, the reference feature vector for each model set of data entries, and the corresponding data property descriptor. The apparatus 10 may include a model training processor, which computes a weight for each statistical characteristic in the set of statistical characteristics for a particular data type, which weights are used to generate the result of the feature vector comparison. The weight applied to each individual statistical characteristic (feature vector component) in calculating the overall result of the feature vector comparison can be configured by the model training processor executing an artificial intelligence algorithm. The following formula may be used by the vector comparison module 171, wherein the "fingerprint predictor" is the result of the feature vector comparison (fingerprint being a name given to feature vectors).

$$Fingerprint\ predictor = W_F\left(\sum_{i=1}^{n} W_{FF}\,P_{FF}\right)$$

$W_F$ - *Weight applied to vector comparison result;*

$W_{FF}$ - *weight* applied to individual feature vector component comparison;

$P_{FF}$ - result of comparison of individual feature vector component.

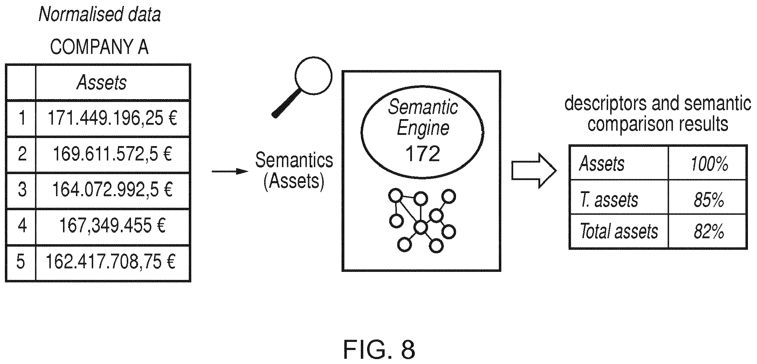

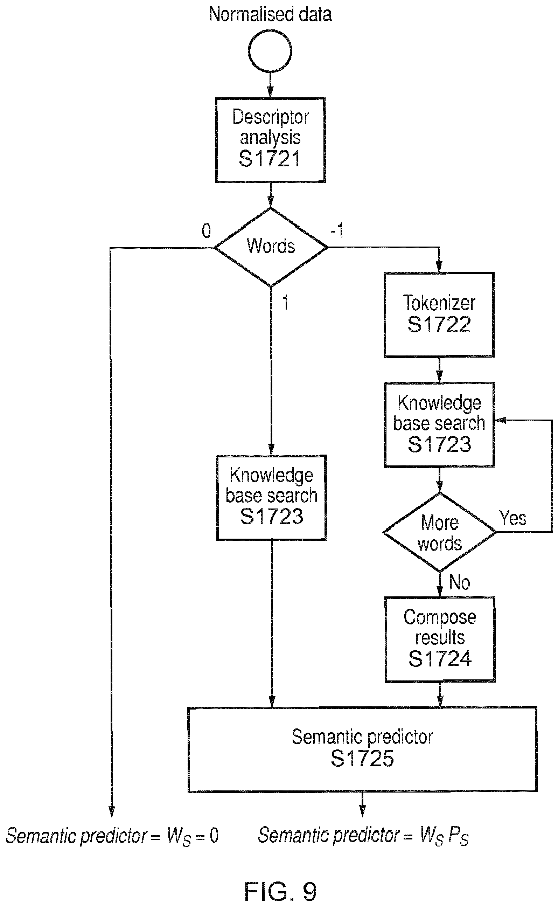

The semantic comparison module 172 is configured to compute the relevance of the semantic part of the data property descriptors. The semantic comparison module 172 supports the vector comparison module 171 by providing more information to be used by the comparison processor 17 in ranking the descriptors and thereby improving the accuracy of the selected descriptors. As is detailed in Figure 8, the input for the semantic comparison module 172 is the semantic data (i.e. descriptor) extracted from the query set of data entries, and the output is a set of ordered descriptors for the normalised data based on semantic similarity. As illustrated in Figure 9, the semantic comparison module 172 may be referred to as a semantic engine.

First, the semantic comparison module 172 extracts the descriptor of the property represented by the query data entries (label or header) to be analysed. The extracted descriptor is processed through the exemplary method illustrated in Figure 9, which contains the following steps:

Descriptor analysis step S1721: This step extracts the descriptor or label from the query set of data entries.

Keywords tokenizer step S1722: This step analyses and extract the keywords of the descriptor, in that case, the descriptor could be only one word or be composed by more than one word.

Knowledge base search step S1723: This step explores a stored or otherwise accessible knowledge base and retrieve the most similar element(s) based on string similarity. For example, the knowledge base may contain the property descriptors stored in association with the reference feature vectors.

Result composition step S1724: This step collects the different results of the knowledge base search module and composes the results as a unique set of results.

Semantic predictor step S1725: This step calculates the score of similarity, as well as to provide a similarity recommendation with the highest-scoring results. The similarity recommendation is based on: the descriptor of the query set of data entries, and the searchable descriptors provided by the knowledge base search step S1723 or the result composition step S1724 in the case of more than one word. With these elements the semantic predictor step S1725 is able to provide a semantic similarity result.

Finally, a set of similar descriptors is provided by the semantic component. This set is ranked by a score which is calculated by a weight and a similarity result as is detailed in the following formula:

$$Semantic\ predictor = W_S\,P_S$$

$W_S$ - weight applied to semantic comparison result;

$P_S$ - semantic comparison result.

The property descriptor selection module 18 combines the results of the semantic comparison module 172 and the vector comparison module 171 (or the combination is performed by the comparison processor 17) and provides a final recommendation of one or more property descriptors to the user as selectable elements of a user interface, the final recommendation taking into account the weights set by the model for the vector comparison result and the semantic comparison result. Afterwards, the model training processor adds the knowledge collected from the user feedback and recalculates the weights for the vector comparison result and the semantic comparison result. These feedbacks collected have a high impact to: increase the knowledge base, and provide accurate recommendations taking into account evolutions over time.

The property descriptor selection processor 18 of Figure 3 is exemplary of the property descriptor selection processor of Figure 1. In the example of Figure 3, the property descriptor selection processor 18 presents to a user of the apparatus 10, via a user interface, the top n ranked property descriptors based on the output of the comparison processor, and selects one of the top n property descriptors in accordance with the user selection, for storing in association with the query set of data entries in the reconciled data storage unit 12b.

The reference data storage unit 11 stores the set of reference feature vectors with which the query feature vector is compared, the associated model sets of data entries represented by the respective associated reference feature vector, and the associated property descriptor for the model set of data entries. The reference data storage unit 11 supplies the knowledge needed by the system to recognise data properties of ingested sets of data entries.

A semantic part of the reference data storage unit 11 stores a map (or data graph/ontological model) with all the descriptors associated to the data properties of the model sets of data entries, storing the relation between descriptors (parent, neighbourhood, related, etc.), and the inference of the bonds between descriptors and data property analysed. With these features the knowledge base is able to provide expertise in the semantic component.

This semantic part may grow with use, so that on each occasion a data property descriptor is manually assigned to a set of data entries by a user, the data property descriptor is added to the semantic part. The semantic part stores the descriptor, and an association to the set of data entries to which the descriptor is assigned, the association representing the final decision adopted by the user which links both of them. Through this process the semantic part grows in terms of knowledge with use, and reinforces the bonds between descriptors and sets of data entries. One of the key benefits of the incremental learning is the evolution of the knowledge during the time reinforcing the weight of some bonds and weakening others taking into account the evolution of the knowledge in time.

The reference data storage unit 11 also stores the reference feature vectors for comparison with the query feature vectors. The reference set of feature vectors may be feature vectors generated by the feature vector generation processor for sets of data entries for which a user of the apparatus 10 assigns a property descriptor. The reference data storage unit 11 stores the assigned property descriptor in association with the reference feature vector.

The result of comparison between the query feature vector and the reference feature vectors is used as input to a model, which also takes as an input a result of semantic comparison between a query set descriptor and the respective descriptors of the reference feature vectors. The model is trained, for example, by configuring a weighting applied to each factor is generating an aggregate result. The reference data storage unit 11 may also store the user feedbacks as a knowledge base, indicating when a user selection matches a descriptor highest-ranked by the model, and when it does not. A machine learning algorithm trains the model to adjust the weightings so that the descriptors (which are stored in association with respective reference feature vectors) highest ranked by the model better match the user selection. In the final stage of the property descriptor selection, the n most similar descriptors based on a combination of vector comparison and semantics are provided to the user. And the user agrees with the most similar selection or disagrees by selecting another of the n most similar descriptors or manually assigning another descriptors to the set of data entries.

User feedbacks are stored assigning weight to the decisions taken by the user which links the query set of data entries with the property descriptor selected or otherwise assigned finally by the user. These weights are analysed through the artificial intelligence algorithm(s) of the model training processor and are balanced to offer more accurate recommendation taking into account the user preferences.

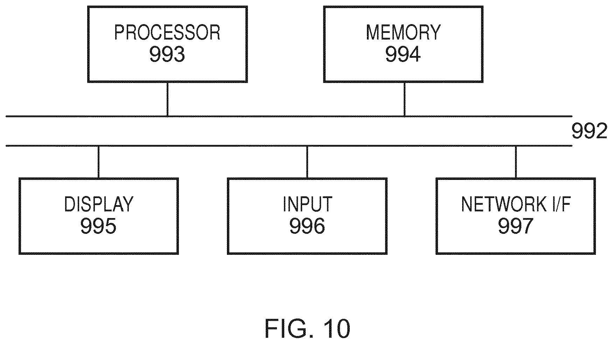

FIGURE 10 is a block diagram of a computing device, such as a server, which embodies the present invention, and which may be used to implement a data property recognition apparatus 10 or a data property recognition method of an embodiment. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the query processor 14, the feature vector generation processor 16, the comparison processor 17, the property descriptor selection processor 18, the reconciled data manager 12a, and the model training processor, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball etc may be included in the computing device.

The query processor 14 of Figures 1 & 3, and the obtaining step S202 of Figure 2, may be a processor 993 (or plurality thereof) executing processing instructions (a program) stored on a memory 994 and exchanging data via a network I/F 997. In particular, the processor 993 executes processing instructions to receive, via the network I/F, a query set of data entries from an external data source and optionally format and normalise the query set of data entries. Furthermore, the processor 993 may execute processing instructions to store the query set of data entries on a connected storage unit and/or to transmit, via the network I/F 997, the query set of data entries to the feature vector generation processor 16 for further processing.

The feature vector generation processor 16 of Figures 1 & 3, and the generating and compiling step S203 of Figure 2, may be processor hardware 993 (or plurality thereof) executing processing instructions (a program) stored on a memory 994. In particular, the processor hardware 993 executes processing instructions to receive, from query processor 14, an input set of data entries and transform the input set of data entries into a feature vector. Furthermore, the processor hardware 993 may execute processing instructions to respond to output the generated feature vector either for storage on a connected storage unit 16 and/or for further processing, such as comparison processing by the comparison processor 17.

The comparison processor 17 of Figures 1 & 3, and the vector comparison and ranking step S204 of Figure 2, may be a processor 993 (or plurality thereof) executing processing instructions (a program) stored on a memory 994 and exchanging data via a network I/F 997. In particular, the processor 993 executes processing instructions to obtain the query feature vector from the feature vector generation processor 16 and execute vector comparisons between the query feature vector and the set of reference feature vectors. Furthermore, the processor 993 may execute processing instructions to store ranked property descriptors on a connected storage unit and/or to transmit, via the network I/F 997, ranked property descriptors to the property descriptor selection processor 18 for selection processing.

The property descriptor selection processor 18 of Figures 1 & 3, and the selecting a best match descriptor step S205 of Figure 2, may be a processor 993 (or plurality thereof) executing processing instructions (a program) stored on a memory 994 and exchanging data via a network I/F 997. In particular, the processor 993 executes processing instructions to receive, via the network I/F or otherwise, ranked property descriptors from the comparison processor 17 and select a descriptor to be stored in association with the query set of data entries in the reconciled data storage unit 12b. Furthermore, the processor 993 may execute processing instructions to store the query set of data entries and the selected descriptor on a connected storage unit and/or to transmit, via the network I/F 997, the query set of data entries and the selected descriptor to the reconciled data storage unit manager 12a for storage on the reconciled data storage unit 12b, as in adding query set to reconciled data storage step S206 of Figure 2.

Methods embodying the present invention may be carried out on a computing device such as that illustrated in Figure 10. Such a computing device need not have every component illustrated in Figure 10, and may be composed of a subset of those components. A method embodying the present invention may be carried out by a single computing device in communication with one or more data storage servers via a network. The computing device may be a network of data storage servers itself providing the reference data storage unit 11 and the reconciled data storage unit 12b.

A method embodying the present invention may be carried out by a plurality of computing devices of Figure 10 operating in cooperation with one another.

## Claims

**1.** A data property recognition apparatus, comprising:

a reference data storage unit storing a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries;

a query processor, configured to obtain, from a data source, a query set of data entries;

a feature vector generation processor configured to obtain the query set of data entries from the query processor, to generate a value of each of the set of statistical characteristics for the query set of data entries, and to output a query feature vector composed of the generated values of statistical characteristics;

a comparison processor, configured to obtain the query feature vector, to execute vector comparisons between the query feature vector and the plurality of stored reference feature vectors, and to rank the descriptors stored in association with the reference feature vectors based on the result of the vector comparison between the query feature vector and the respective associated reference feature vector;

a property descriptor selection processor, configured to select a best match descriptor from among the descriptors stored in association with the reference feature vectors based on the ranking of the descriptors by the comparison processor;

a reconciled data manager, configured to add the query set of data entries to a reconciled data storage unit in association with the best match descriptor.

2. The data property recognition apparatus according to claim 1, wherein:

the query processor is configured to obtain, from the data source, a descriptor identifying a property represented by the query set of data entries; and

the comparison processor is configured to obtain, as a query set descriptor, the descriptor identifying a property represented by the query set of data entries, to execute semantic comparisons between the query set descriptor and the descriptors stored in association with the reference feature vectors, respectively, wherein the ranking of the descriptors stored in association with the reference feature vectors is based both on the result of the executed semantic comparison between the descriptor and the query set descriptor, and on the result of the vector comparison between the query feature vector and the respective associated reference feature vector.

3. The data property recognition apparatus according to claim 1 or 2, further comprising:

the property descriptor selection processor is configured to output a user interface comprising the highest-ranked descriptor according to the ranking by the comparison processor as a selectable descriptor, and to receive via the user interface an input selection of the selectable descriptor as the best match descriptor;

the reconciled data manager being configured, in response to the input selection of the selectable descriptor at the user interface, to add the query set of data entries to the reconciled data storage unit in association with the selected best match descriptor.

4. The data property recognition apparatus according to claim 3, wherein
the user interface comprises the top n descriptors according to the ranking by the comparison processor as selectable descriptors, the property descriptor selection processor being configured to receive an input selection of one of the selectable descriptors as the selected best match descriptor.

5. The data property recognition apparatus according to claim 2, wherein
the result of each executed vector comparison is a number and the result of each executed semantic comparison is a number, and
the comparison processor comprises a model which converts the vector comparison result number and the semantic comparison result number into an aggregate result value representing a degree of relevance of the respective descriptor to the query set of data entries, the ranking being in order of aggregate result value.

6. The data property recognition apparatus according to claims 4 & 5, further comprising:

a model training processor configured to train the model by at least:

monitoring, for each of a plurality of instances of query sets of data entries obtained by the query processor, the top n descriptors included as selectable descriptors in the user interface, and the input selection from among the selectable descriptors, and, reconfiguring the model to maximise, for the monitored instances, a number of instances for which the descriptor ranked first in order of aggregate result value matches the input selection.

7. The data property recognition apparatus according to any of the preceding claims, wherein:

each individual model set of data entries among the model sets of data entries is constrained to comprise data entries of a common data type, the common data type being one of plural supported data types;
the query set of data entries is constrained to comprise data entries of a common data type, the common data type being one of the plural supported data types;
the set of statistical characteristics for which values are included in each of the reference feature vectors is dependent upon the data type from the plural supported data types of the data entries comprising the respective model set of data entries; and
the set of statistical characteristics for which values are included in the query feature vector is dependent upon the data type from the plural supported data types of the data entries comprising the query set of data entries;
the plural supported data types being string, numeric, and numerical time-series.

8. The data property recognition apparatus according to claim 7, wherein
the executed vector comparisons are between the query feature vector and each of the stored reference set of feature vectors, and the comparison comprises:

a preprocessing step of comparing a data type of the set of data entries represented by the reference feature vector with a data type of the query set of data entries represented by the query feature vector, and
when the data types are different based on the comparison of the preprocessing step, excluding the reference feature vector from vector comparison; and
when the data types are the same, performing a vector comparison between the query feature vector and the reference feature vector to obtain a number representing the similarity between the compared feature vectors.

9. The data property recognition apparatus according to claim 7 or 8, wherein
the set of statistical characteristics for a set of data entries of the numeric type, comprises two or more from among the following:

number of data entries;

minimum value;
maximum value;
first quartile value;
third quartile value;
median value;
mean;
standard deviation;
variance;
most repeated data entry.

10. The data property recognition apparatus according to any of claims 7 to 9, wherein
the set of statistical characteristics for a set of data entries of the string type, comprises two or more from among the following:

number of data entries;
alphabet of data entries;
average number of characters per data entry;
average number of white spaces per data entry;
average number of full stops per data entry;
average number of commas per data entry;
average number of semicolons per data entry;
most repeated data entry;
longest common substring;
percentage of unique entries;
statistical metering based on string distances or other meters.

11. The data property recognition apparatus according to any of claims 7 to 10, wherein
the set of statistical characteristics for a set of data entries being of the numerical time-series type, comprises two or more from among the following:

number of data values;
number of entries;
minimum numerical value;
maximum numerical value;
first quartile numerical value;
third quartile numerical value;
median numerical value;
mean of numerical values;
standard deviation;
variance;
covariance;
skewness;
kurtosis;
start date;
end date.

12. A data property recognition method, comprising:

storing a plurality of model sets of data entries, each model set of data entries being a plurality of data entries individually representing a property common to the model set of data entries, and being stored in association with a reference feature vector and a descriptor of the property, the reference feature vector comprising a value for each of a set of statistical characteristics representing the model set of data entries;

obtaining, from a data source, a query set of data entries;

generating a value of each of the set of statistical characteristics for the query set of data entries, and compiling a query feature vector composed of the generated values of statistical characteristics;

executing vector comparisons between the query feature vector and the plurality of stored reference feature vectors, and ranking the descriptors stored in association with the reference feature vectors based on the result of the vector comparison between the query feature vector and the respective associated reference feature vector;

selecting a best match descriptor from among the descriptors stored in association with the reference feature vectors based on the ranking of the descriptors by the comparison processor;

adding the query set of data entries to a reconciled data storage unit for storage in association with the best match descriptor.

13. A computer program which, when executed by a computing device, causes the computing device to perform the method according to claim 12.

14. A computer-readable medium storing the computer program according to claim 13.

15. A computer-readable medium according to claim 14, wherein the computer-readable medium is non-transitory.

FIG. 1

QUERY SET

obtaining a query
set of data entries
S202

storing a plurality
of model sets of
data entries
S201

generating values
and compiling
feature vector
S203

executing vector
comparisons and
ranking descriptors
S204

selecting a best
match descriptor
S205

adding query set
to reconciled data
storage
S206

FIG. 2

FIG. 3

comparison processor
17

vector comparison module
171

172

reference data
11

10

Ranking top matches

90% | 80% | 70%

based on

Acquisition module
141

Field normalisation
142

feature vector generation processor
16

property descriptor selection process
18

- Field A (90%)
- Field B (80%)
- Field C (70%)

12a

reconciled data
12b

feature vector generation processor 16

data property mapper 161

reference data 11

FIG. 4

| COMPANY A | | | |
|---|---|---|---|
| | *Assets* | *Liabilities* | *Total* |
| 1 | 137.159.357 £ | 117.142.007 £ | 320.057.258 £ |
| 2 | 135.689.258 £ | 117.683.118 £ | 315.197.445 £ |
| 3 | 131.258.394 £ | 118.397.195 £ | 305.584.264 £ |
| 4 | 133.879.564 £ | 116.445.005 £ | 312.998.000 £ |
| 5 | 129.934.167 £ | 115.768.432 £ | 310.665.120 £ |

Standard information

Normalisation
1£ = 1.25€

| COMPANY A | | | |
|---|---|---|---|
| | *Assets* | *Liabilities* | *Total* |
| 1 | 171.449.196,25 € | 146.427.508,75 € | 400.071.572,5 € |
| 2 | 169.611.572,5 € | 147.103.897,5 € | 393.996.806,25 € |
| 3 | 164.072.992,5 € | 147.996.493,75 € | 381.980.330 € |
| 4 | 167.349.455 € | 145.556.256,25 € | 391.247.500 € |
| 5 | 162.417.708,75 € | 144.710.540 € | 388.331.400 € |

Standard normalised information

FIG. 5

| COMPANY A | | | |
| --- | --- | --- | --- |
| | *Assets* | *Liabilities* | *Total* |
| 1 | 171.449.196,25 € | 146.427.508,75 € | 400.071.572,5 € |
| 2 | 169.611.572,5 € | 147.103.897,5 € | 393.996.806,25 € |
| 3 | 164.072.992,5 € | 147.996.493,75 € | 381.980.330 € |
| 4 | 167.349.455 € | 145.556.256,25 € | 391.247.500 € |
| 5 | 162.417.708,75 € | 144.710.540 € | 388.331.400 € |

Standard normalised information

feature vector generation →

**FEATURE VECTOR**

- Code pattern. ✗
- Time series. ✗
- Values. ✓
- Value range. 9.031.487,5
- Maximum. 171.449.196,25
- Minimum. 162.417.708,75
- Average. 166.980.185
- Median. 167.349.455
- Standard deviation. 15.363.872,553
- Value type. Double
- Number of digits. 9

feature vector components (statistical characteristic values)

FIG. 6

query feature vector

- Code pattern. ✗
- Time series. ✗
- Values. ✓
- Value range. 9.031.487,5
- Maximum. 171.449.196,25
- Minimum. 162.417.708,75
- Average. 166.980.185
- Median. 167.349.455
- Standard deviation. 15.363.872,553
- Value type. Double
- Number of digits. 9

reference data storage unit 11

| | Feature 1 | Feature 2 | Feature 3 | • • • | Feature N | |
|---|---|---|---|---|---|---|
| Assets | 9.031.487,5 | 171.449.196,25 | 170.368.957,21 | | 171.615.763.03 | 95% |
| Benefit | 11.968.572,5 | 168.699.358,6 | 152.936.917 | | 166.648.693.82 | 77% |
| Liabilities | 72.992,5 | 15.849.367 | 15.684.259,4 | | 381.980.330 | |
| Profit | 17,349,45 1 | 225.598.684.2 | 223.631.925,6 | | 391.247.500 | |
| Revenue | 12.697.718,7 | 168.321.421.8 | 175.695.368,3 | | 169.684.987,17 | 86% |

ranked descriptors

| Assets | 95% |
|---|---|
| Revenue | 86% |
| Benefit | 77% |

FIG. 7

Normalised data

COMPANY A

| | Assets |
|---|---|
| 1 | 171.449.196,25 € |
| 2 | 169.611.572,5 € |
| 3 | 164.072.992,5 € |
| 4 | 167,349.455 € |
| 5 | 162.417.708,75 € |

Semantics (Assets)

Semantic Engine 172

descriptors and semantic comparison results

| Assets | 100% |
|---|---|
| T. assets | 85% |
| Total assets | 82% |

FIG. 8

Normalised data

FIG. 9

PROCESSOR
993

MEMORY
994

992

DISPLAY
995

INPUT
996

NETWORK I/F
997

FIG. 10

Europäisches
Patentamt

European
Patent Office

Office européen
des brevets

# EUROPEAN SEARCH REPORT

Application Number

EP 16 20 5543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/208855 A1 (LINGENFELDER CHRISTOPH [US] ET AL) 28 August 2008 (2008-08-28) * paragraph [0002] - paragraph [0003] * * paragraph [0005] * * paragraph [0010] * * paragraph [0015] * * paragraph [0019] * * paragraph [0031] - paragraph [0033] * * paragraph [0035] * * paragraph [0039] * * paragraph [0048] - paragraph [0050] * * paragraph [0054] * * paragraph [0061] * * paragraph [0064] * * figures 7, 8, 14, 15 * | 1-15 | INV. G06F17/30 |
| A | WO 2004/107217 A1 (ROW2 TECHNOLOGIES INC [US]; GANGE DAVID M [US]; FRAMROZE BOMI PATEL [I] 9 December 2004 (2004-12-09) * the whole document * | 1-15 | |
| X | CHRISTIAN DRUMM ET AL: "Quickmig", PROCEEDINGS OF THE ACM SIXTEENTH CONFERENCE ON INFORMATION AND KNOWLEDGE MANAGEMENT (CIKM 2007), 6-9 NOVEMBER 2007, LISBOA, PORTUGAL, ACM, 2 PENN PLAZA, SUITE 701 NEW YORK NY 10121-0701 USA, 6 November 2007 (2007-11-06), pages 107-116, XP058192912, DOI: 10.1145/1321440.1321458 ISBN: 978-1-59593-803-9 * the whole document * | 1-15 | TECHNICAL FIELDS SEARCHED (IPC) G06F |

-/--

The present search report has been drawn up for all claims

| Place of search | Date of completion of the search | Examiner |
|---|---|---|
| The Hague | 3 May 2017 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 20 5543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anhai Doan ET AL: "Reconciling Schemas of Disparate Data Sources: A Machine-Learning Approach", ACM SIGMOD 2001, Santa Barbara, CA, USA, 24 May 2001 (2001-05-24), XP055046420, Retrieved from the Internet: URL:http://reference.kfupm.edu.sa/content/r/e/reconciling_schemas_of_disparate_data_so_34545.pdf [retrieved on 2012-12-03] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 3 May 2017 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 5543

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2017

| Patent document cited in search report | Publication date | Patent family member(s) | Publication date |
|---|---|---|---|
| US 2008208855 A1 | 28-08-2008 | NONE | |
| WO 2004107217 A1 | 09-12-2004 | EP 1631925 A1<br>US 2004006559 A1<br>US 2006074859 A1<br>WO 2004107217 A1 | 08-03-2006<br>08-01-2004<br>06-04-2006<br>09-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016220771